# EUROPÄISCHE PATENTSCHRIFT

(11) **EP 3 053 724 B1**
(45) Veröffentlichungstag und Bekanntmachung des Hinweises auf die Patenterteilung: **08.09.2021**
(21) Anmeldenummer: 16151581.2
(22) Anmeldetag: 15.01.2016
(51) Int. Cl.: B29C 45/26, B29C 33/30

(54) **SPRITZGUSSWERKZEUG, VERFAHREN ZUR HERSTELLUNG EINES GEHÄUSETEILS UNTER VERWENDUNG EINES SOLCHEN SPRITZGUSSWERKZEUGS SOWIE GEHÄUSETEIL**
INJECTION MOULDING TOOL, METHOD FOR MANUFACTURING A HOUSING PART USING SUCH AN INJECTION MOULDING TOOL AND HOUSING PART
OUTIL DE MOULAGE PAR INJECTION, PROCEDE DE PRODUCTION D'UNE PARTIE DE CARTER A L'AIDE D'UN TEL OUTIL DE MOULAGE PAR INJECTION ET PARTIE DE CARTER

(30) Priorität: 06.02.2015 DE 102015202116
(43) Veröffentlichungstag der Anmeldung: 10.08.2016
(73) Patentinhaber: Power Plus Communications AG, 68167 Mannheim (DE)
(72) Erfinder: Veselcic, Marko, 67122 Altrip (DE)
(74) Vertreter: Patentanwälte Bauer Vorberg Kayser

(56) Entgegenhaltungen:
- EP-A1- 0 858 387
- EP-A1- 1 380 399
- WO-A1-97/31771
- DE-A1- 3 542 840
- DE-A1-102007 056 111
- DE-A1-102012 100 419
- DE-C2- 19 814 771
- US-A1- 2012 040 327
- US-A1- 2014 178 518
- US-B1- 7 497 677
- None

## Beschreibung

Die Erfindung betrifft ein Spritzgusswerkzeug zur Herstellung eines Hutschienengehäuseteils, umfassend wenigstens einen ersten Formteil und einen zweiten Formteil, wobei der erste Formteil und der zweite Formteil in einem zusammengeführten Zustand wenigstens einen Teil eines mit einer Spritzgussmasse auszufüllenden Hohlraums bilden. Die Erfindung betrifft ferner ein Verfahren zur Herstellung eines solchen Hutschienengehäuseteils für Elektrobaugruppen im Spritzgussverfahren mit einem erfindungsgemäßen Spritzgusswerkzeug.

Gehäuse für Elektrobaugruppen haben unter anderem die Aufgabe, gefährliche elektrische Spannungen an der in dem Gehäuse enthaltenen Elektrobaugruppe von der Umgebung fernzuhalten. Dies ist insbesondere wichtig, wenn Lebewesen in die Nähe der Elektrobaugruppe gelangen können. In diesem Fall wird üblicherweise ab 48 Volt von einer gefährlichen Spannung gesprochen. Bei Gehäusen zur Montage auf Tragschienen soll das Gehäuse zudem die Installation der Elektrobaugruppen erleichtern und sichere und strukturierte Systeme ermöglichen. Die in Europa vermutlich am weitesten verbreitete Tragschiene ist als Hutschiene bekannt und ist nach EN 50022 genormt. Hutschienen finden beispielsweise in Elektroverteilern Anwendung und tragen die meisten oder gar alle der in dem Elektroverteiler installierten Geräte, wie Sicherungsautomaten, Fehlerstromschutzschalter, Überspannungsableiter, Steuergeräte, Zeitschaltuhren oder auch intelligente Stromzähler (Smart Meter).

Entsprechende Gehäuse für Elektrobaugruppen, auch Hutschienengehäuse genannt, werden in der Regel im Spritzgussverfahren aus Kunststoff gefertigt. Die Gehäuse bestehen dabei in der Regel aus zwei oder mehr Gehäuseteilen, die miteinander verbunden werden. Nach Installation der Elektrobaugruppe in dem Gehäuse und nach Zusammenfügen der Gehäuseteile können diese auch wieder geöffnet werden. In der Regel handelt es sich hierbei um zwei oder mehr miteinander über Schnappverbindungen verbundene Hauptteile sowie eine weitere Komponente die zum Einrasten auf der Hutschiene dient. Dabei werden diese Hauptteile im Allgemeinen mit einem flachen Basisteil, das parallel zur Hutschiene verläuft, sowie einem Deckel aufgebaut.

Die Abmessungen eines Hutschienengehäuses sowie deren Einbaumaße sind in Deutschland nach DIN 43880 genormt. Dabei wird die Breite der Gehäuse in der Maßeinheit Teilungseinheit (TE) angegeben. Eine Teilungseinheit entspricht nach DIN 43880 einer Breite von 17,5 mm. Die Gesamtbreite eines Gehäuses ist somit zwangsweise ein ganzzahliges Vielfaches einer Teilungseinheit, wenn das Gehäuse der Normung entspricht.

Die Spritzgusswerkzeuge zur Herstellung solcher Gehäuseteile bestehen aus mindestens zwei Formteilen, die in einem zusammengeführten Zustand einen Hohlraum bilden, der der Form des gewünschten Gehäuseteils entspricht. In diesen Hohlraum wird die fließfähige Spritzgussmasse eingebracht, welche erstarrt und so das Gehäuseteil bildet.

Die bekannten Spritzgusswerkzeuge werden in Abhängigkeit der Breite des Gehäuses konzipiert. Je nach Anforderung müssen an einem Gehäuse an unterschiedlichen Stellen Durchbrüche in verschiedenen Größen angeordnet sein, beispielsweise für eine RJ45-Buchse oder eine Spannungsversorgung. Um diesen Anforderungen Rechnung zu tragen ist es aus der Praxis bekannt, die Spritzgusswerkzeuge mit Werkzeugeinsätzen zu versehen, durch welche die benötigten Durchbrüche realisierbar sind. Dadurch wird erreicht, dass nicht das gesamte Spritzgusswerkzeug, sondern lediglich die jeweiligen Werkzeugeinsätze ausgetauscht werden müssen, um Gehäuseteile mit unterschiedlichen Durchbrüchen herzustellen.

Ein wesentlicher Nachteil solcher Werkzeugeinsätze liegt darin, dass diese nur für Spritzgusswerkzeuge nutzbar sind, mit denen Gehäuseteile einer bestimmten Breite herstellbar sind. Werkzeugeinsätze zur Herstellung eines Gehäuses mit einer Breite von 4 TE sind daher nicht kompatibel mit einem Spritzgusswerkzeug zur Herstellung eines Gehäuses mit einer Breite von 6 TE. Dies führt dazu, dass für unterschiedlich breite Gehäuse ein neuer Werkzeugeinsatz zur Erzeugung eines identischen Durchbruchs gebaut werden muss. Daher sind die aus dem Stand der Technik bekannten Spritzgusswerkzeuge sehr oft neu anzufertigen, wenn ein Gehäuseteil bzw. Gehäuse mit einer bestimmten Breite und einer bestimmten geometrischen Ausgestaltung hergestellt werden soll. Zwangsweise sind somit die mit einem solchen Spritzgusswerkzeug hergestellten Gehäuse bzw. Gehäuseteile kosten- und zeitintensiv in der Fertigung.

Aus der DE 198 14 771 C2 sind eine Hauptleitungsabzweigklemme sowie ein Spritzgießwerkzeug zur Herstellung des Sockels einer solchen Klemme vorbekannt. Dabei ist das Spritzgießwerkzeug aus mehreren modularen Formeinsätzen und einem abschließenden Formeinsatz aufgebaut.

Weiterhin sind in der DE 10 2007 056 111 A1 ein Verfahren und eine Vorrichtung zur Herstellung eines Überspannungsableiters beschrieben. Auch das Dokument EP 1 380 399 A1 betrifft ein Spritzwerkzeug. Dieses dient zur Herstellung von Gehäusen elektronischer Geräte, beispielsweise Handys, CD-Player, schnurlose Telefone, Autoradios etc.

Des Weiteren zeigen die Dokumente EP 0 858 387 A1, DE 10 2012 100 419 A1, US 2014/178518 A1, US 7 497 677 B1, WO 97/31771 A1, DE 35 42 840 A1 und US 2012/040327 A1 Ausgestaltungen von Spritzgusswerkzeugen und Spritzgussverfahren zur Herstellung verschiedenster Teile.

Der vorliegenden Erfindung liegt die Aufgabe zugrunde, ein Spritzgusswerkzeug und ein Verfahren zur Herstellung eines Hutschienengehäuseteils für Elektrobaugruppen der eingangs genannten Art derart auszugestalten und weiterzubilden, dass mit konstruktiv einfachen Mitteln und somit kostengünstig ein individuelles Spritzgusswerkzeug realisierbar ist, so dass ein entsprechendes Gehäuseteil schnell und kostengünstig herstellbar ist.

Erfindungsgemäß wird die voranstehende Aufgabe durch die Merkmale des Anspruchs 1 gelöst. Danach ist das in Rede stehende Spritzgusswerkzeug dadurch gekennzeichnet, dass der erste Formteil und/oder der zweite Formteil aus mindestens zwei Modulen aufgebaut sind.

In erfindungsgemäßer Weise ist dabei erkannt worden, dass die zugrundeliegende Aufgabe durch eine geschickte Ausgestaltung des ersten Formteils und/oder des zweiten Formteils in verblüffend einfacher Weise gelöst werden kann. Dazu sind der erste Formteil und/oder der zweite Formteil aus mindestens zwei Modulen aufgebaut. Aufgrund der modularen Ausgestaltung zumindest eines Formteils sind durch beliebige Kombinationen unterschiedlicher Module eine Vielzahl von verschiedenen Formteilen und somit Geometrien von Hutschienengehäuseteilen realisierbar.

An dieser Stelle sei darauf hingewiesen, dass der erste Formteil und der zweite Formteil in einem zusammengeführten Zustand den gesamten Hohlraum, sog. Kavität, bilden können, der zur Herstellung des Hutschienengehäuseteils notwendig ist. Jedoch kann von dem ersten Formteil und dem zweiten Formteil im zusammengeführten Zustand auch lediglich ein Teil des benötigten Hohlraums gebildet sein, wobei weitere Formteile vorgesehen sein können, um die Kavität insgesamt zu schließen. Diese weiteren Formteile können das Negativ einer Fläche des herzustellenden Hutschienengehäuseteils darstellen, an der keine Durchbrüche vorgesehen sind, beispielsweise die Seitenflächen des Hutschienengehäuseteils. Auch ist denkbar, dass einzelne oder mehrere dieser weiteren Formteile jeweils aus mindestens zwei Modulen aufgebaut sind.

In vorteilhafter Weise können der erste Formteil und/oder der zweite Formteil aus mindestens drei Modulen ausgebildet sein. Durch diese konstruktive Maßnahme wird die Variabilität des Spritzgusswerkzeugs nochmals erhöht, so dass Gehäuseteile mit Durchbrüchen an verschiedenen Stellen und mit unterschiedlichsten Geometrien mit minimalem Aufwand herstellbar sind.

Dabei ist es von besonderem Vorteil, wenn die Breite eines inneren Moduls einem Vielfachen einer Teilungseinheit entspricht. Als inneres Modul ist dasjenige Modul zu verstehen, dass zwischen zwei weiteren Modulen angeordnet ist. Des Weiteren sei an dieser Stelle darauf hingewiesen, dass unter dem Begriff "Vielfaches" jeglicher Faktor zu verstehen ist, der durch eine positive rationale Zahl darstellbar ist. So kann die Breite des inneren Moduls beispielsweise 1/2 TE, 2/3 TE, 1 TE etc. betragen. Bei einer entsprechenden Anordnung können die äußeren Module, d.h. diejenigen Module, die im Randbereich des Formteils angeordnet sind, eine Breite aufweisen, die einem Vielfachen einer Teilungseinheit minus der Dicke des Hutschienengehäuseteils entspricht. Die Dicke des Hutschienengehäuseteils kann zwischen 1,7 mm und 1,9 mm, in besonders vorteilhafter Weise 1,8 mm, betragen, so dass die Stabilität des Hutschienengehäuseteils bzw. des Hutschienengehäuses gewährleistet ist. Durch eine entsprechende Dimensionierung der inneren und äußeren Module sind Hutschienengehäuseteile bzw. Hutschienengehäuse mit einer Breite von beliebigen ganzzahligen Teilungseinheiten herstellbar.

Vorzugsweise kann zumindest ein Modul ein Negativ eines Durchbruchs aufweisen. Dabei kann es sich beispielsweise um einen Durchbruch für eine RJ45-Buchse und/oder für eine Spannungsversorgung und/oder für Lüftungsöffnungen handeln. Durch eine Kombination von Modulen mit unterschiedlichen Ausgestaltungen zur Bildung von Durchbrüchen sind beliebig gestaltete Hutschienengehäuseteile herstellbar.

Des Weiteren ist denkbar, dass zumindest ein Modul ein Negativ einer Stegausbildung zum Halten einer Platine aufweist. In besonders vorteilhafter Weise weist mindestens ein Modul das Negativ mehrerer Stegausbildungen auf, so dass auch mehrere Platinen innerhalb des Hutschienengehäuseteils sicher anordenbar sind. Dabei sei darauf hingewiesen, dass im Folgenden die Begriffe Steg und Stegausbildung synonym verwendet werden.

Zur Temperierung des Spritzgusswerkzeugs kann zumindest ein Modul einen Kühlkanal aufweisen. Ferner ist denkbar, dass mehrere Module eines Formteils Kühlkanäle aufweisen, die miteinander kommunizieren, so dass die zu einem Formteil zusammengesetzten Module in raffinierter Weise auf einer gewünschten Temperatur gehalten werden können. Des Weiteren ist es von Vorteil, wenn zumindest ein Modul wenigstens eine Auswerfereinrichtung zur Entformung des erstarrten Spritzlings aufweist. Dabei ist das Modul in weiter vorteilhafter Weise derart ausgebildet, dass die Entformungskanten solcherart an dem Hutschienengehäuseteil ausgebildet sind, dass diese unter einer vor dem Hutschienengehäuseteil anzuordnenden Berührschutzabdeckung liegen. Durch diese konstruktive Maßnahme wird ein einheitliches Bild im montierten Zustand erzielt. Alternativ oder zusätzlich kann zur Entformung von Partien des Hutschienengehäuseteils, die nicht in normaler Entformungsrichtung entformbar sind, wenigstens ein Schieber an zumindest einem Modul angeordnet sein.

Um eine weitere Variabilität des Spritzgusswerkzeugs zu realisieren, kann zumindest ein Modul aus wenigstens zwei Submodulen aufgebaut sein. Die Submodule können entsprechend der voranstehend genannten Merkmale betreffend die Module ausgebildet sein.

In Anbetracht dessen, dass ein Großteil der Durchbrüche vom innenliegenden Bereich des Gehäuseteils gesehen gefertigt werden, kann der Formteil, der zumindest einen Teil des Negativs für die äußere Seite des Hutschienengehäuseteils bildet, einteilig ausgebildet sein. Dabei kann es sich um den ersten Formteil oder den zweiten Formteil handeln. Dies hat den wesentlichen Vorteil, dass für eine Vielzahl von unterschiedlichsten Hutschienengehäuseteilen bzw. Hutschienengehäusen ein einziges, einteilig ausgebildetes Formteil vorgesehen sein kann. Dieses einteilig ausgebildete Formteil bildet im zusammengeführten Zustand mit dem modular ausgebildeten Formteil zumindest einen Teil der Kavität des Spritzgusswerkzeugs.

Die Überprüfung der hergestellten Hutschienengehäuseteile kann in besonders einfacher Weise dadurch erleichtert werden, dass an den Modulen und/oder den Submodulen und/oder den einteilig ausgebildeten Formteilen Kennungen vorgesehen sind, beispielsweise das Negativ von Ziffern und/oder Buchstaben. Dadurch sind die hergestellten Hutschienengehäuseteile eindeutig identifizierbar.

Hinsichtlich eines Verfahrens zur Herstellung eines Hutschienengehäuseteils für Elektrobaugruppen, ist die voranstehende Aufgabe durch die Merkmale des Anspruchs 10 gelöst. Danach wird das Hutschienengehäuseteil im Spritzgussverfahren mit einem erfindungsgemäßen Spritzgusswerkzeug hergestellt.

In erfindungsgemäßer Weise wird durch die Herstellung des Hutschienengehäuseteils mit einem Spritzgusswerkzeug, dessen erster Formteil und/oder zweiter Formteil aus zumindest zwei Modulen aufgebaut ist, erreicht, dass die Umrüstzeit erheblich reduziert wird, so dass mit geringem Aufwand ein Hutschienengehäuseteil mit nahezu beliebiger Geometrie herstellbar ist.

In vorteilhafter Weise werden in einem ersten Verfahrensschritt aus einer Datenbank die Module, Submodule und/oder einteiligen Formteile ausgewählt, die zur Realisierung des ersten Formteils und/oder des zweiten Formteils benötigt werden. Durch eine solche Datenbank können beliebige Module - zunächst virtuell - miteinander kombiniert werden, um das benötigte Spritzgusswerkzeug zu konfigurieren. Die Datenbank kann dabei sämtliche bereits gefertigten und somit zur Verfügung stehenden Module, Submodule und einteilig ausgebildeten Formteile umfassen.

In einem nächsten Schritt können die ausgewählten Module oder Submodule zur Bildung des ersten Formteils und/oder des zweiten Formteils zusammengefügt werden. Dabei können die Module bzw. Submodule beispielsweise miteinander verstiftet werden, um so eine feste Verbindung zwischen den Modulen bzw. Submodulen zu erreichen. Alternativ oder zusätzlich können die Module bzw. Submodule miteinander verspannt, verschraubt und/oder in einer Halteeinrichtung fixiert werden.

Im Anschluss daran kann das Spritzgussverfahren zur Erzeugung des Hutschienengehäuseteils durchgeführt werden.

Durch das erfindungsgemäße Verfahren wird in äußerst kurzer Zeit und mit geringen Kosten das benötigte Spritzgusswerkzeug konfiguriert, so dass auch kleine Stückzahlen an Hutschienengehäuseteilen bzw. Hutschienengehäusen kostengünstig herstellbar sind.

Für den Fall, dass eine bestimmte Werkzeugkonfiguration nicht mit den vorhandenen Modulen, Submodulen und einteiligen Formteilen realisierbar ist, müssen lediglich die fehlenden Module, Submodule oder einteiligen Formteile gefertigt werden. Diese können in die Datenbank mit aufgenommen werden, so dass die Anzahl der zur Verfügung stehenden Module, Submodule und Formteile größer wird und diese auch in Zukunft weiter Verwendung finden können.

Um in dem Gehäuseteil bzw. in dem Gehäuse Durchbrüche für RJ-45 Buchsen zu realisieren, die eine Höhe/Breite von ca. 15 mm aufweisen, kann das Hutschienengehäuseteil bzw. das Hutschienengehäuse derart ausgebildet sein, dass unter der Berührschutzabdeckung zumindest zwei Ebenen angeordnet sind. Dabei ist es von weiterem Vorteil, wenn die Entformungskante bzw. die Entformungskanten für die Hutschienengehäuseseitenteile und für das Hutschienengehäuseoberteil - Top-Teil - im montierten Zustand unter der Berührschutzabdeckung angeordnet sind, um ein einheitliches Bild zu ergeben.

Bei einem Hutschienengehäuse, das aus zwei punktsymmetrischen Hutschieneng-Gehäuseseitenteilen aufgebaut ist, kann das Top-Teil in besonders vorteilhafter Weise mittig angeordnet sein. Durch diese Konstruktion ist eine äußerst kompakte Bauweise realisiert.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 10 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung die Gehäuseteile eines Hutschienengehäuses in einem nicht-verbundenen Zustand,
- Fig. 2: in einer perspektivischen Ansicht ein erstes Ausführungsbeispiel eines Formteils eines erfindungsgemäßen Spritzgusswerkzeugs mit einem erfindungsgemäßen Hutschienengehäuseteil,
- Fig. 3: in einer perspektivischen Ansicht die einzelnen Module des in Fig. 2 dargestellten Formteils,
- Fig. 4: in einer perspektivischen Ansicht ein zweites Ausführungsbeispiel eines aus mehreren Modulen aufgebauten Formteils eines erfindungsgemäßen Spritzgusswerkzeugs,
- Fig. 5: in einer perspektivischen Ansicht ein drittes Ausführungsbeispiel eines aus mehreren Modulen aufgebauten Formteils eines erfindungsgemäßen Spritzgusswerkzeugs,
- Fig. 6: in einer perspektivischen Ansicht ein viertes Ausführungsbeispiel eines aus mehreren Modulen aufgebauten Formteils eines erfindungsgemäßen Spritzgusswerkzeugs,
- Fig. 7: in einer perspektivischen Ansicht das Hutschienengehäuseteil gemäß Fig. 2 sowie ein erfindungsgemäßes Spritzgusswerkzeugs in einem geöffneten Zustand und
- Fig. 8: in einer perspektivischen Ansicht das erfindungsgemäße Spritzgusswerkzeug gemäß Fig. 7 in einem geschlossenen Zustand.

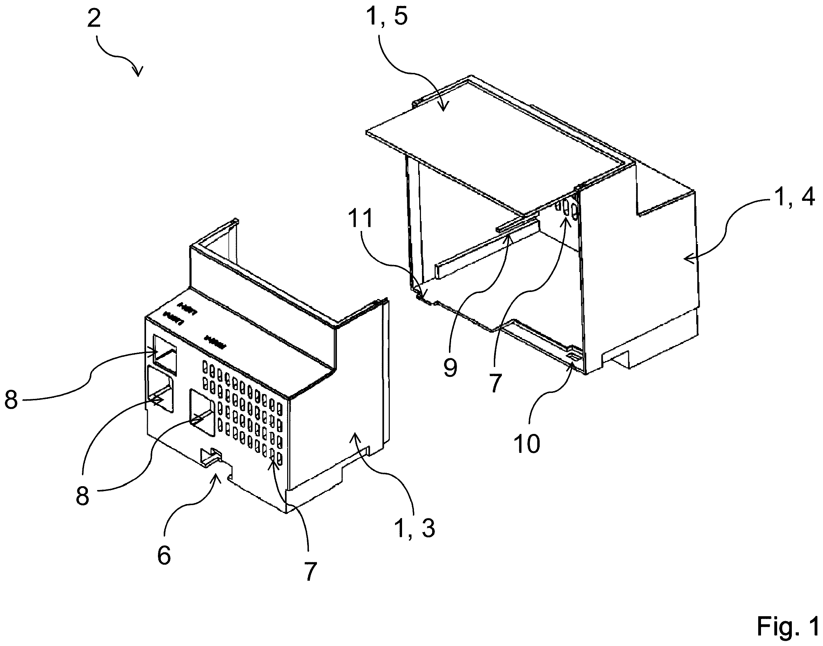

Fig. 1 zeigt in einer perspektivischen Darstellung die Hutschienengehäuseteile 1 eines Hutschienengehäuses 2 in einem nicht-verbundenen Zustand. Das Hutschienengehäuse 2 umfasst insgesamt drei Hutschienengehäuseteile 1, nämlich ein erstes Hutschienengehäuseseitenteil 3 und ein zweites Hutschienengehäuseseitenteil 4 sowie ein Hutschienengehäuseoberteil 5. Zur Befestigung des Hutschienengehäuses 2 an einer Hutschiene ist in den Hutschienengehäuseseitenteilen 3, 4 jeweils eine Aufnahme 6 vorgesehen, in welche die Hutschiene einbringbar ist. Dabei wird das Hutschienengehäuse 2 mit einer nicht dargestellten weiteren Komponenten mit der Hutschiene verrastet, so dass das Hutschienengehäuse 2 sicher an der Hutschiene fixiert ist.

Das Hutschienengehäuseseitenteile 3, 4 sind im hier dargestellten Ausführungsbeispiel punktsymmetrisch ausgebildet. Zur Belüftung der im Inneren der Hutschienengehäuseseitenteile 3, 4 anzuordnenden Elektrobaugruppen sind als Lüftungsöffnungen ausgebildete Durchbrüche 7 vorgesehen. Des Weiteren weisen die Hutschienengehäuseseitenteile 3, 4 weitere Durchbrüche 8 auf, die für eine Spannungsversorgung und/oder eine RJ45-Buchse benötigt werden. Zur Aufnahme von Leiterplatten innerhalb des Hutschienengehäuses 2 sind an der Innenseite der Hutschienengehäuseseitenteile 3, 4 Stege 9 ausgebildet. Zwischen den Stegen 9 können die Leiterplatten sicher gehalten werden.

Zum Verrasten der Hutschienengehäuseseitenteile 3, 4 sind miteinander korrespondierende Ausnehmungen 10 und Laschen 11 vorgesehen. In einem zusammengebauten Zustand verrasten die Laschen 11 des ersten Hutschienengehäuseteils 3 mit den Ausnehmungen 10 des zweiten Hutschienengehäuseteils 4 - und umgekehrt. Dadurch ist eine sichere Verbindung geschaffen, die sich jedoch auch ohne Probleme wieder lösen lässt.

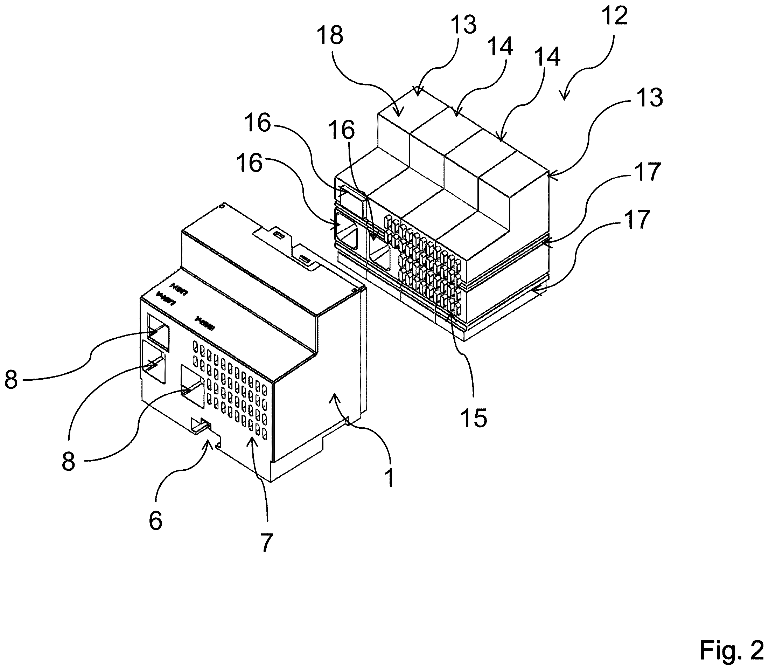

Fig. 2 zeigt in einer perspektivischen Ansicht ein erstes Ausführungsbeispiel eines Formteils 12 eines erfindungsgemäßen Spritzgusswerkzeugs mit einem Hutschienengehäuseteil 1. Das Hutschienengehäuseteil 1 ist als Hutschienengehäuseseitenteil 3, 4 ausgebildet.

Das Formteil 12 ist aus vier Modulen 13, 14 aufgebaut. Die Module 13, 14 können miteinander verstiftet oder verschraubt sein. Jegliche Art der Befestigung der Module 13, 14 miteinander ist dabei denkbar. Die beiden äußeren Module 13 weisen eine Dicke auf, die einem Vielfachen einer Teilungseinheit Minus der Dicke des Hutschienengehäuseteils 1 entspricht. Die zwischen den äußeren Modulen 13 angeordneten inneren Module 14 weisen eine Breite eines Vielfachen einer Teilungseinheit auf. Folglich weist das durch das Formteil 12 herstellbare Hutschienengehäuseteil 1 insgesamt eine Breite auf, die einem ganzzahligen Vielfachen einer Teilungseinheit entspricht. Somit erfüllt dieses Hutschienengehäuseteil 1 die Anforderungen der DIN 43880 in Bezug auf die Gehäusebreite.

Die Module 13, 14 weisen - teilweise - das Negativ 15 der Durchbrüche 7 für Lüftungsöffnungen sowie das Negativ 16 der Durchbrüche 8 für eine RJ45-Buchse bzw. eine Spannungsversorgung auf. Des Weiteren ist deutlich zu erkennen, dass an den Modulen 13, 14 das Negativ 17 der Stege 9 ausgebildet ist. Zur Erzeugung von zwei Ebenen an dem Hutschienengehäuseteil 1 sind an den Modulen 13, 14 Vorsprünge 18 angeordnet.

Durch den modularen Aufbau des Formteils 12 sind auf sehr schnelle und somit kostengünstige Weise Formteile 12 zur Herstellung unterschiedlichster Hutschienengehäuseteile 1 generierbar. Sofern die Module 13, 14 bereits vorhanden sind, beschränkt sich die benötigte Zeit im Wesentlichen auf die Umrüstzeit zum Zusammenbauen des Formteils 12. Dabei wird die Umrüstzeit nochmals dadurch verringert, dass die zur Verfügung stehenden Module 13, 14 in einer Datenbank abgelegt sind, so dass sich das gewünschte Formteil 12 virtuell zusammenfügen lässt.

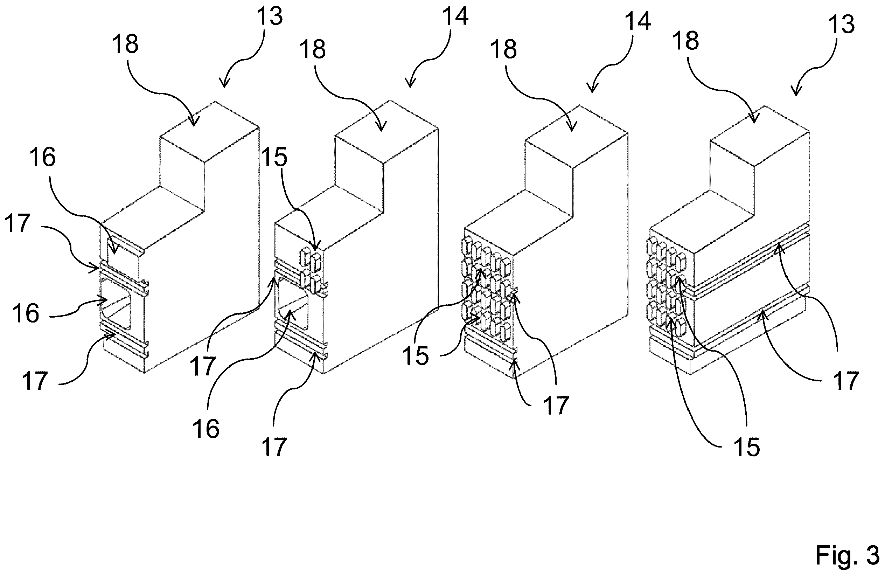

Fig. 3 zeigt in einer perspektivischen Ansicht die einzelnen Module 13, 14 des in Fig. 2 dargestellten Formteils 12. Zur Vermeidung von Wiederholungen sei an dieser Stelle auf die voranstehenden Ausführungen zur Fig. 2 verwiesen.

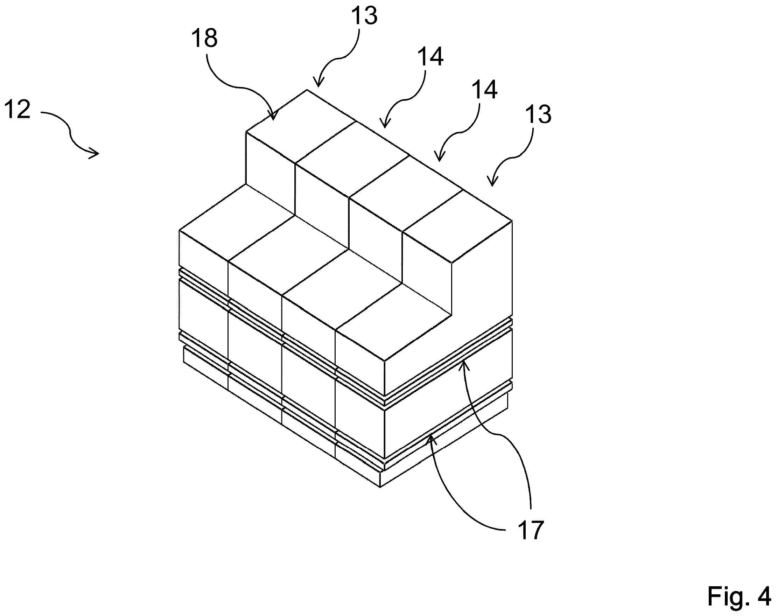

Fig. 4 zeigt in einer perspektivischen Ansicht ein zweites Ausführungsbeispiel eines aus vier Modulen 13, 14 aufgebauten Formteils 12 eines erfindungsgemäßen Spritzgusswerkzeugs. Die Module 13, 14 sind dabei derart ausgestaltet, dass jeweils lediglich das Negativ 17 einer Stegausbildung sowie Vorsprünge 18 vorgesehen sind. Mit Hilfe dieses Formteils 12 sind keinerlei Durchbrüche 7, 8 an dem Gehäuseteil 1 herstellbar. Jedoch ist denkbar, dass das nicht dargestellte, korrespondierende Formteil 12 das Negativ 15, 16 von Durchbrüchen 7, 8 aufweist, so dass die Durchbrüche 7, 8 von diesem Formteil 12 erzeugt werden. Wesentlich ist, dass die äußeren Module 13 eine Breite von einem Vielfachen einer Teilungseinheit minus der Dicke des herzustellenden Hutschienengehäuseteils 1 aufweisen und dass die inneren Module 14 eine Breite von einem Vielfachen einer Teilungseinheit aufweisen. Somit entspricht die Breite des durch dieses Formteil 12 hergestellten Hutschienengehäuseteils 1 einem ganzzahligen Vielfachen einer Teilungseinheit.

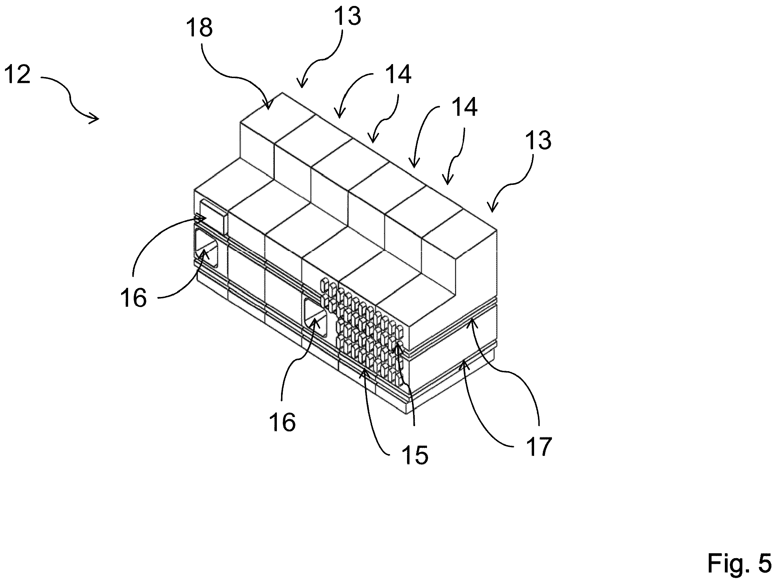

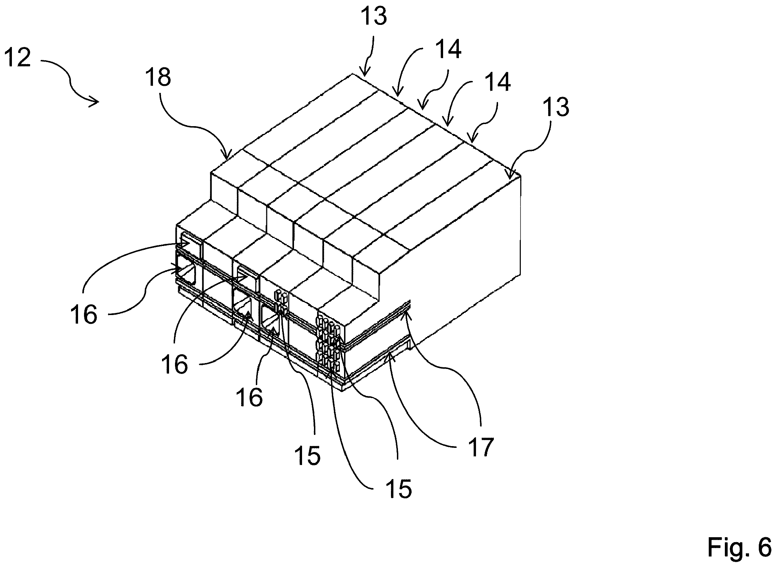

Die Fig. 5 und 6 zeigen in einer perspektivischen Ansicht ein drittes und ein viertes Ausführungsbeispiel eines aus mehreren Modulen 13, 14 aufgebauten Formteils 12 eines erfindungsgemäßen Spritzgusswerkzeugs. Dabei umfassen die in den Fig. 5 und 6 dargestellten Formteilen 12 jeweils sechs Module 13, 14. Zur Vermeidung von Wiederholungen sei des Weiteren auf die Beschreibung der Fig. 2, 3 und 4 verwiesen.

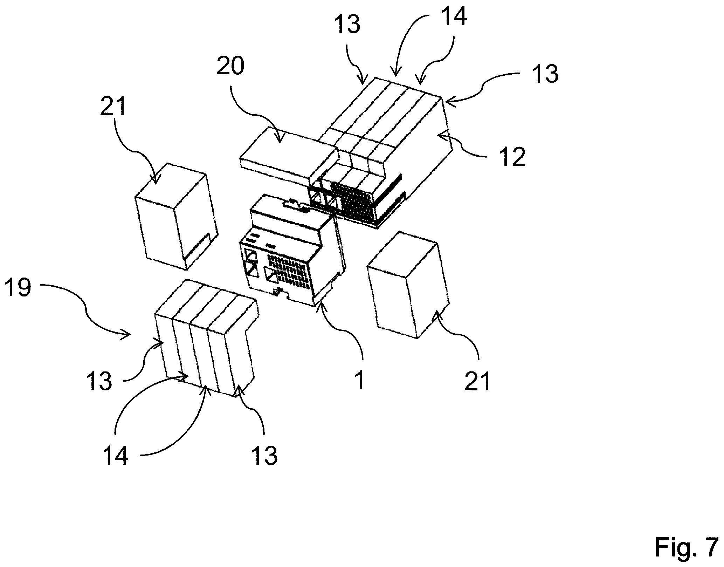

Fig. 7 zeigt in einer perspektivischen Ansicht das Hutschienengehäuseteil 1 aus Fig. 2 sowie ein erfindungsgemäßes Spritzgusswerkzeug in einem geöffneten Zustand. Das Spritzgusswerkzeug umfasst das in Fig. 2 dargestellte Formteil 12 sowie ein vorderes Formteil 19, ein oberes Formteil 20 und zwei seitliche Formteile 21. Dabei sind das Formteile 12 und das vordere Formteil 19 jeweils aus vier Modulen 13, 14 aufgebaut. Die das Formteil 19 bildenden Module 13, 14 weisen dabei jeweils eine Breite von einem Vielfachen einer Teilungseinheit auf. Das obere Formteil 20 und die seitlichen Formteile 21 sind einteilig ausgebildet.

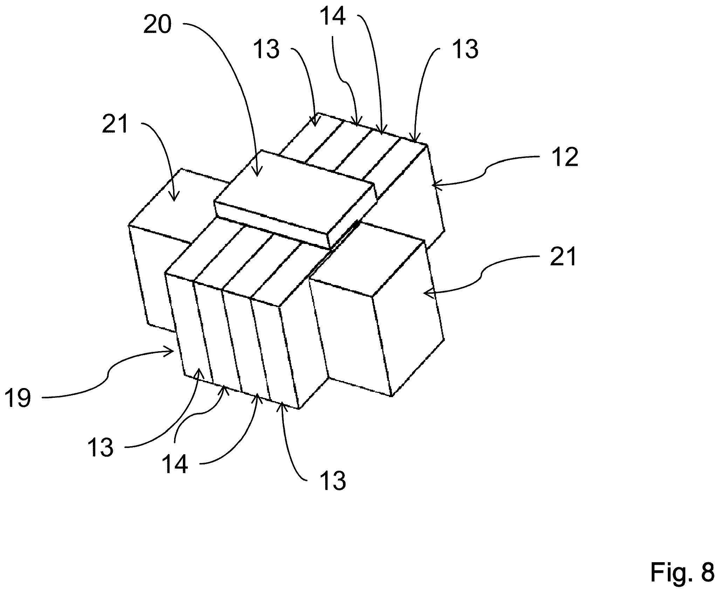

Fig. 8 zeigt in einer perspektivischen Ansicht das erfindungsgemäße Spritzgusswerkzeug gemäß Fig. 7 in einem geschlossenen Zustand. In dem zusammengeführten Zustand bilden die Formteile 12, 19, 20, 21 einen Hohlraum, der - nahezu vollständig - der Form des herzustellenden Hutschienengehäuseteils 1 entspricht und in welchen die Spritzgussmasse eingefüllt wird.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Hutschienengehäuseteil
- 2: Hutschienengehäuse
- 3: erstes Hutschienengehäuseseitenteil
- 4: zweites Hutschienengehäuseseitenteil
- 5: Hutschienengehäuseoberteil
- 6: Aufnahme
- 7: Durchbruch (Lüftungsöffnungen)
- 8: Durchbruch (RJ45-Buchse bzw. Spannungsversorgung)
- 9: Stege
- 10: Ausnehmung
- 11: Lasche
- 12: Formteil
- 13: äußeres Modul
- 14: inneres Modul
- 15: Negativ (Lüftungsöffnungen)
- 16: Negativ (RJ45-Buchse bzw. Spannungsversorgung)
- 17: Negativ (Stege)
- 18: Vorsprung
- 19: vorderes Formteil
- 20: oberes Formteil
- 21: seitliches Formteil

## Patentansprüche

1. Spritzgusswerkzeug zur Herstellung eines Hutschienengehäuseteils (1), umfassend wenigstens einen ersten Formteil (12, 19, 20, 21) und einen zweiten Formteil (12, 19, 20, 21), wobei der erste Formteil (12, 19, 20, 21) und der zweite Formteil (12, 19, 20, 21) in einem zusammengeführten Zustand wenigstens einen Teil eines mit einer Spritzgussmasse auszufüllenden Hohlraums bilden,
**dadurch gekennzeichnet, dass** der erste Formteil (12, 19, 20,21) und/oder der zweite Formteil (12, 19, 20, 21) aus mindestens zwei Modulen (13, 14) aufgebaut sind.

2. Spritzgusswerkzeug nach Anspruch 1, **dadurch gekennzeichnet, dass** der erste Formteil (12, 19, 20, 21) und/oder der zweite Formteil (12, 19, 20, 21) aus mindestens drei Modulen (13, 14) ausgebildet ist.

3. Spritzgusswerkzeug nach Anspruch 2, **dadurch gekennzeichnet, dass** die Breite eines inneren Moduls (13) einem Vielfachen einer Teilungseinheit entspricht.

4. Spritzgusswerkzeug nach einem der Ansprüche 1 bis 3, **dadurch gekennzeichnet, dass** die Breite eines äußeren Moduls (14) einem Vielfachen einer Teilungseinheit minus der Dicke des Hutschienengehäuseteils (1) entspricht.

5. Spritzgusswerkzeug nach einem der Ansprüche 1 bis 4, **dadurch gekennzeichnet, dass** zumindest ein Modul (13, 14) ein Negativ (15, 16) eines Durchbruchs (7, 8), beispielsweise für eine RJ45-Buchse und/oder für eine Spannungsversorgung und/oder für Lüftungsöffnungen, aufweist.

6. Spritzgusswerkzeug nach einem der Ansprüche 1 bis 5, **dadurch gekennzeichnet, dass** zumindest ein Modul (13, 14) ein Negativ (17) einer Stegausbildung (9) zum Halten einer Platine aufweist.

7. Spritzgusswerkzeug nach einem der Ansprüche 1 bis 6, dass zumindest ein Modul (13, 14) wenigstens einen Kühlkanal und/oder wenigstens eine Auswerfereinrichtung zur Entformung und/oder wenigstens einen Schieber aufweist.

8. Spritzgusswerkzeug nach einem der Ansprüche 1 bis 7, **dadurch gekennzeichnet, dass** zumindest ein Modul (13, 14) aus wenigstens zwei Submodulen aufgebaut ist.

9. Spritzgusswerkzeug nach einem der Ansprüche 1 bis 8, **dadurch gekennzeichnet, dass** der erste Formteil (12, 19, 20, 21) oder der zweite Formteil (12, 19, 20, 21) einteilig ausgebildet ist.

10. Verfahren zur Herstellung eines Hutschienengehäuseteils (1), im Spritzgussverfahren mit einem Spritzgusswerkzeug nach einem der Ansprüche 1 bis 9.

11. Verfahren nach Anspruch 10, **gekennzeichnet durch** folgende Verfahrensschritte:
- Auswahl der Module (13, 14), Submodule und/oder des einteiligen Formteils (12, 19, 20, 21) aus einer Datenbank entsprechend des benötigten ersten Formteils (12, 19, 20, 21) und/oder des zweiten Formteils (12, 19, 20, 21),
- Zusammenfügen der ausgewählten Module (13, 14) oder Submodule zur Bildung des ersten Formteils (12, 19, 20, 21) und/oder des zweiten Formteils (12, 19, 20, 21),
- Durchführung des Spritzgussverfahrens.

## Claims

1. Injection moulding tool for the production of a top hat rail housing part (1), comprising at least one first moulded part (12, 19, 20, 21) and a second moulded part (12, 19, 20, 21), wherein the first moulded part (12, 19, 20, 21) and the second moulded part (12, 19, 20, 21) in a combined state form at least one part of a cavity to be filled with an injection moulding mass, **characterized in that** the first moulded part (12, 19, 20, 21) and/or the second moulding part (12, 19, 20, 21) are constructed from at least two modules (13, 14).

2. Injection moulding tool according to Claim 1, **characterized in that** the first moulded part (12, 19, 20, 21) and/or the second moulded part (12, 19, 20, 21) is formed from at least three modules (13, 14).

3. Injection moulding tool according to Claim 2, **characterized in that** the width of an inner module (13) corresponds to a multiple of a horizontal pitch.

4. Injection moulding tool according to any one of Claims 1 to 3, **characterized in that** the width of an outer module (14) corresponds to a multiple of a horizontal pitch minus the thickness of the top hat rail housing part (1).

5. Injection moulding tool according to any one of Claims 1 to 4, **characterized in that** at least one module (13, 14) comprises a negative (15, 16) of a breakthrough (7, 8), for example, for an RJ45 connector and/or for a power supply and/or for ventilation openings.

6. Injection moulding tool according to any one of Claims 1 to 5, **characterized in that** at least one module (13, 14) comprises a negative (17) of a bar formation (9) for holding a circuit board.

7. Injection moulding tool according to any one of Claims 1 to 6 that at least one module (13, 14) comprises at least one cooling channel and/or at least one ejector device for removal from the mould and/or at least one slide.

8. Injection moulding tool according to any one of Claims 1 to 7, **characterized in that** at least one module (13, 14) is constructed from at least two submodules.

9. Injection moulding tool according to any one of Claims 1 to 8, **characterized in that** the first moulded part (12, 19, 20, 21) or the second moulded part (12, 19, 20, 21) is designed as a single piece.

10. Method for preparing a top hat rail housing part (1) within the scope of an injection moulding process using an injection moulding tool according to any one of Claims 1 to 9.

11. Method according to Claim 10, **characterized by** the following process steps:
selection of modules (13, 14), submodules and/or single-piece moulded part (12, 19, 20, 21) from a database corresponding to the required first moulded part (12, 19, 20, 21) and/or the second moulded part (12, 19, 20, 21),
- joining the selected modules (13, 14) or submodules to form the first moulded part (12, 19, 20, 21) and/or the second moulded part (12, 19, 20, 21),
- carrying out the injection moulding process.

## Revendications

1. Outil de moulage par injection, destiné à la fabrication d'une pièce de boîtier profilé chapeau (1), comprenant au moins une première pièce moulée (12, 19, 20, 21) et une deuxième pièce moulée (12, 19, 20, 21), à l'état réuni, la première pièce moulée (12, 19, 20, 21) et la deuxième pièce moulée (12, 19, 20, 21) formant au moins une partie d'une cavité destinée à être remplie d'une masse de moulage par injection,
**caractérisé en ce que** la première pièce moulée (12, 19, 20, 21) et/ou la deuxième pièce moulée (12, 19, 20, 21) sont conçues en au moins deux modules (13, 14).

2. Outil de moulage par injection selon la revendication 1, **caractérisé en ce que** la première pièce moulée (12, 19, 20, 21) et/ou la deuxième pièce moulée (12, 19, 20, 21) sont réalisées en au moins trois modules (13, 14).

3. Outil de moulage par injection selon la revendication 2, **caractérisé en ce que** la largeur d'un module (13) interne correspond à un multiple d'une unité de division.

4. Outil de moulage par injection selon l'une quelconque des revendications 1 à 3, **caractérisé en ce que** la largeur d'un module (14) externe correspond à un multiple d'une unité de division à laquelle on soustrait l'épaisseur de la pièce de boîtier profilé chapeau (1).

5. Outil de moulage par injection selon l'une quelconque des revendications 1 à 4, **caractérisé en ce qu'**au moins un module (13, 14) comporte un négatif (15, 16) d'un ajour (7, 8), par exemple pour une douille RJ45 et/ou pour une alimentation en tension et/ou pour des ouvertures d'aération.

6. Outil de moulage par injection selon l'une quelconque des revendications 1 à 5, **caractérisé en ce qu'**au moins un module (13, 14) comporte un négatif (17) d'une réalisation de tenon (9) destinée à maintenir une carte de circuit imprimé.

7. Outil de moulage par injection selon l'une quelconque des revendications 1 à 6, **caractérisé en ce qu'**au moins un module (13, 14) comporte au moins un canal de refroidissement et/ou au moins un dispositif d'éjection pour le démoulage et/ou au moins un coulisseau.

8. Outil de moulage par injection selon l'une quelconque des revendications 1 à 7, **caractérisé en ce qu'**au moins un module (13, 14) est conçu en au moins deux sous-modules.

9. Outil de moulage par injection selon l'une quelconque des revendications 1 à 8, **caractérisé en ce que** la première pièce moulée (12, 19, 20, 21) ou la deuxième pièce moulée (12, 19, 20, 21) est réalisée d'un seul tenant.

10. Procédé, destiné à fabriquer une pièce de boîtier profilé chapeau (1), par procédé de moulage par injection à l'aide d'un outil de moulage par injection selon l'une quelconque des revendications 1 à 9.

11. Procédé selon la revendication 10, **caractérisé par** les étapes de procédé suivantes, consistant à :
- sélectionner les modules (13, 14), sous-modules et/ou la pièce moulée (12, 19, 20, 21) d'un seul tenant dans une base de données en fonction de la première pièce moulée (12, 19, 20, 21) et/ou de la deuxième pièce moulée (12, 19, 20, 21) requise,
- assembler les modules (13, 14) ou sous-modules sélectionnés pour créer la première pièce moulée (12, 19, 20, 21) et/ou la deuxième pièce moulée (12, 19, 20, 21),
- réaliser le procédé de moulage par injection.
